(19) Europäisches Patentamt / European Patent Office / Office européen des brevets

(11) **EP 3 117 537 B1**

(12) **EUROPEAN PATENT SPECIFICATION**

(45) Date of publication and mention
of the grant of the patent:
**28.08.2019  Bulletin 2019/35**

(21) Application number: **15717949.0**

(22) Date of filing: **12.03.2015**

(51) Int Cl.:
**H04B 11/00** *(2006.01)*

(86) International application number:
**PCT/GB2015/050723**

(87) International publication number:
**WO 2015/136291 (17.09.2015 Gazette 2015/37)**

(54) **AQUATIC TIME SYNCHRONISATION SYSTEM AND METHOD OF DETERMINING A TIME OFFSET**

AQUATISCHES ZEITSYNCHRONISATIONSSYSTEM UND VERFAHREN ZUR BESTIMMUNG
EINES ZEITVERSATZES

SYSTÈME DE SYNCHRONISATION DE TEMPS AQUATIQUE ET PROCÉDÉ DE DÉTERMINATION
D'UN DÉCALAGE DE TEMPS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.03.2014  GB 201404345**

(43) Date of publication of application:
**18.01.2017  Bulletin 2017/03**

(73) Proprietor: **Sonardyne International Limited
Yately, Hampshire GU46 6GD (GB)**

(72) Inventor: **NEWBOROUGH, Darryl
Hartley Wintney
Hampshire RG27 8HY (GB)**

(74) Representative: **Laudens
Blackwell House
Guildhall Yard
London EC2V 5AE (GB)**

(56) References cited:
**EP-A2- 2 525 240**

• **"IEEE Standard for a Precision Clock
Synchronization Protocol for Networked
Measurement and Control Systems;IEEE Std
1588-2008 (Revision of IEEE Std 1588-2002) ED -
Anonymous", IEEE STANDARD; [IEEE
STANDARD], IEEE, PISCATAWAY, NJ, USA, 24
July 2008 (2008-07-24), pages c1-269,
XP017604130, ISBN: 978-0-7381-5400-8 cited in
the application**

**Description**

The present invention relates to an aquatic time synchronisation system of the type that, for example, comprises an aquatic first acoustic communications apparatus and a dynamic aquatic second acoustic communications apparatus. The present invention also relates to a method of determining a time offset, the method being of the type comprising an aquatic first acoustic communications apparatus communicating with a dynamic aquatic second acoustic communications apparatus.

When operating in a subsea environment, it is sometimes desirable to achieve time synchronisation in respect of nodes in a network of communications-enabled nodes. In this regard, data logging applications and navigation applications require time synchronisation. In relation to data logging applications employing a multiple distributed node system, nodes need to be synchronised so that events recorded on one node can be related to events recorded on another node in the system. Without an ability to determine a common time frame, the data recorded by the nodes is unusable. For navigation applications, subsea instruments need to be synchronised so that a receiving node knows when a transmitting node has transmitted a signal and therefore can use one-way time of flight data for navigation purposes. An example of a synchronisation method is set out in the IEEE Precision Time Protocol (PTP) standard 1588-2002, entitled "Standard for a Precision Clock Synchronisation Protocol for Networked Measurement and Control Systems".

It is known for nodes to measure time using local clocks, driven by oscillators of varying quality. However, due to random phase shifts and drift rates of the oscillators, the local time kept at each node in the system will begin to drift independently of each other, resulting in a loss of synchronisation in the system if no corrective action is taken.

Vessels carrying USBL transceivers are known to communicate with transponders located on the seabed in order to determine time offsets between a clock located at the vessel side and an internal clock of a seabed-based transponder. Measurements are initiated and made with respect to the vessel-side equipment and so due to movement of the vessel, full inertial systems are employed vessel-side in order to determine movement of the vessel so as to compensate for such movement when calculating clock offsets, for example as described in EP-A2-2 525 240.

According to the present invention, there is provided an aquatic time synchronisation system comprising: an aquatic first acoustic communications apparatus capable of communicating acoustically with a dynamic aquatic second acoustic communications apparatus, the aquatic first acoustic communications apparatus comprising a first time source and the dynamic aquatic second acoustic communications apparatus comprising a second time source; and an offset calculator; wherein the aquatic first acoustic communications apparatus is arranged to communicate a first acoustic signal having a first acoustic propagation path associated therewith to the dynamic aquatic second acoustic communications apparatus and the dynamic aquatic second acoustic communications apparatus is arranged to communicate a second acoustic signal having a second acoustic propagation path associated therewith to the aquatic first acoustic communications apparatus in reply to the first acoustic signal; and the offset calculator is arranged to use data associated with the first and second acoustic signals in order to determine a time offset between the first and second time sources; characterised in that the aquatic first acoustic communications apparatus is substantially static; the dynamic aquatic second acoustic communications apparatus is arranged to calculate a Doppler shift observed thereby in respect of propagation of the first acoustic signal along the first acoustic propagation path; the aquatic first acoustic communications apparatus is arranged to calculate another Doppler shift observed thereby in respect of propagation of the second acoustic signal along the second acoustic propagation path; and an average Doppler shift is calculated using the calculated Doppler shift and the another calculated Doppler shift.

The second acoustic signal may be communicated in reply to the first acoustic signal after a predetermined period of time.

A translation distance in respect of movement of the dynamic aquatic second acoustic communications apparatus may be calculated using the average Doppler shift calculated and the predetermined period of time.

A time shift may be calculated using the translation distance calculated and an acoustic signal propagation speed in respect of water.

The data associated with the second acoustic signals may comprise the time shift calculated.

The second acoustic signal may comprise first time data.

The first time data may comprise transmit time data in respect of the second acoustic signal.

The dynamic aquatic acoustic communications apparatus may be a transceiver.

The dynamic aquatic second acoustic communications apparatus may be located, when in use, remote from a seabed.

The aquatic first acoustic communications apparatus may be located, when in use, substantially adjacent the seabed or tethered to the seabed.

Movement of the aquatic first acoustic communications apparatus may be substantially immune to surface wave motion.

The first aquatic acoustic communications apparatus may be a transponder.

The dynamic aquatic acoustic communications apparatus may be a transponder.

The dynamic aquatic acoustic communications apparatus may be operably coupled to a surface vessel and, when in use, is immersed in water.

The system may further comprise a submersible vehicle comprising the dynamic aquatic acoustic communications apparatus.

The submersible vehicle may be an autonomous underwater vehicle or a remote operated vehicle.

The aquatic first acoustic communications apparatus may comprise an output port and may be arranged to communicate, when in use, time data associated with the determined time offset via the output port.

The system may further comprise a processing node coupled to the output port and arranged, when in use, to receive the time data.

The processing node may be a seabed recoding node.

The first acoustic communications apparatus may comprise the offset calculator.

The second acoustic communications apparatus comprises the offset calculator.

The system may further comprise a surface-side computing apparatus comprising the offset calculator.

The first aquatic acoustic communications apparatus may be substantially static.

According to the present invention, there is also provided a method of determining a time offset, the method comprising: an aquatic first acoustic communications apparatus communicating a first acoustic signal having a first acoustic propagation path associated therewith to a dynamic aquatic second acoustic communications apparatus; the dynamic aquatic second acoustic communications apparatus communicating a second acoustic signal having a second acoustic propagation path associated therewith to the aquatic first acoustic communications apparatus in reply to the first acoustic signal; and an offset calculator determining a time offset between a first time source of the aquatic first acoustic communications apparatus and a second time source of the dynamic aquatic second acoustic communications apparatus using data associated with the first and second acoustic signals; characterised by: maintaining the aquatic first acoustic communications apparatus substantially static; the dynamic aquatic second acoustic communications apparatus calculating a Doppler shift observed thereby in respect of propagation of the first acoustic signal along the first acoustic propagation path; the aquatic first acoustic communications apparatus calculating another Doppler shift observed thereby in respect of propagation of the second acoustic signal along the second acoustic propagation path; and calculating an average Doppler shift using the calculated Doppler shift and the another calculated Doppler shift.

It is thus possible to provide an aquatic time synchronisation system and a method of determining a time offset that provides improved precision with respect to maintaining synchronisation within an aquatic communications system. This is achieved by minimising the time during which measurements are made, thereby minimising the time during which the dynamic aquatic acoustic communications apparatus can move. The use of Doppler-shift data improves precision further.

At least one embodiment of the invention will now be described, by way of example only, with reference to the accompanying drawings, in which:

**Figure 1** is schematic diagram of a time synchronisation system constituting an embodiment of the invention;

**Figure 2** is a schematic diagram of another time synchronisation system constituting another embodiment of the invention;

**Figure 3** is an event sequence diagram representing a method of determining a time offset employed by the system of Figure 1 or Figure 2;

**Figure 4** is an event sequence diagram representing a method of determining a time offset with improved accuracy over the method of Figure 3;

**Figure 5** is a schematic diagram of a first example of movement of a dynamic aquatic acoustic communications apparatus relative to a static aquatic acoustic communications apparatus;

**Figure 6** is a schematic diagram of a second example of movement of a dynamic aquatic acoustic communications apparatus relative to a static aquatic acoustic communications apparatus;

**Figure 7** is schematic diagram of a further time synchronisation system constituting a further embodiment of the invention; and

**Figure 8** is a schematic diagram of yet another time synchronisation system constituting yet another embodiment of the invention.

Throughout the following description identical reference numerals will be used to identify like parts.

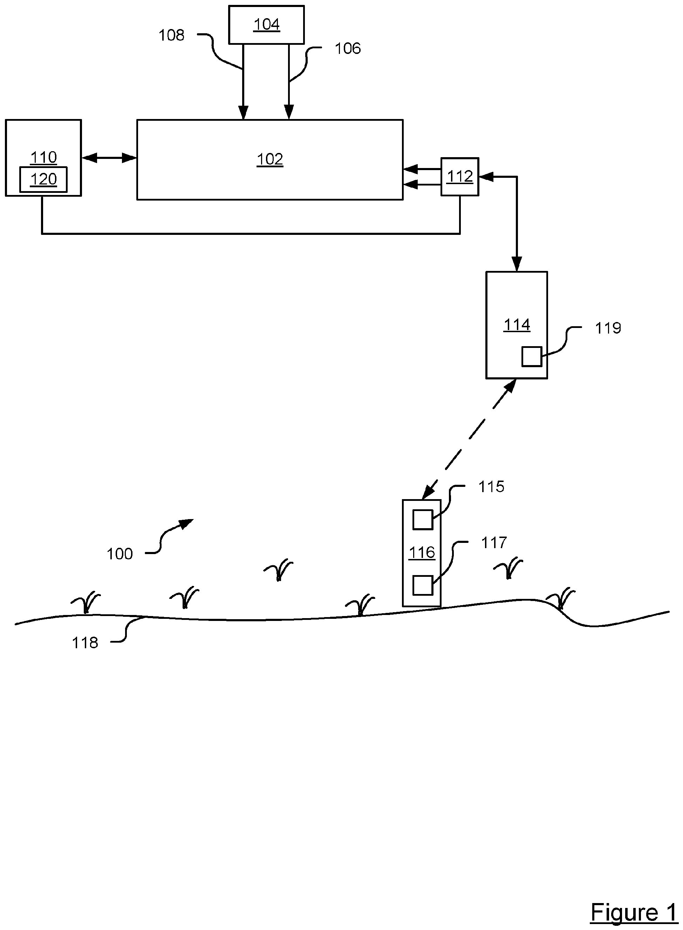

Referring to Figure 1, an aquatic time synchronisation system 100 comprises a navigation sensor hub 102 that is operably coupled to a source of GPS derived signals 104, for example a date and time data stream 106, and a one Pulse Per Second (1PPS) data stream 108 for providing a source of a one second interval to a nanosecond level of precision for use with a GPS time reference signal from the source of GPS-derived signals 104. The navigation sensor hub 102 is capable of timestamping data streams, for example units of data, such as packets of acoustic data, and uses the time information in order to associate other data, such as inclination data, to the units of data, thereby ensuring that the other data is time-relevant to the units of data, such as the packets of acoustic data. Of course, other configurations are possible that use other functionality and/or functional units in place of the navigation sensor hub 102 as will be described later herein.

In this example, in order to support the Ethernet connections described herein, the aquatic time synchronisation system 100 comprises a top-side Ethernet network. However, the skilled person will appreciate that individual point-to-point communications links between units of hardware operating in accordance with a suitable Ethernet protocol can be employed as the "Ethernet connections" described herein.

The navigation sensor hub 102 is coupled via an Ethernet connection to a Personal Computer (PC) 110 or other suitable computing apparatus. The PC 110 is also coupled via the Ethernet connection to a transceiver interface unit 112.

A substantially static aquatic communications apparatus 116, constituting a first communications apparatus, for example a transponder beacon, such as a Compatt 6 transponder available from Sonardyne International Limited, is fixed or secured to the seabed 118 or tethered to the seabed 118 by a tether line or strop (not shown). As such, the substantially static aquatic communications apparatus 116 is substantially immune to surface wave motion. The transponder beacon 116 comprises an offset calculator 117 and a first internal source of time data 115. The transceiver interface unit 112 is coupled via, for example, an RS-422 interface to an aquatic dynamic communications apparatus 114, for example an acoustic transceiver, such as an HPT Ultra-Short BaseLine (USBL) transceiver or a Dunker 6 Long BaseLine (LBL) transceiver available from Sonardyne International Limited, UK. In this example, the transceiver 114 constitutes a second communications apparatus. The transceiver 114 is capable, when in use, of communicating acoustically with the transponder beacon 116, the transceiver 114 also comprising a second source of time data 119, for example an internal clock. The aquatic dynamic acoustic apparatus 114 is operably coupled to a top-side vessel and is immersed in water when used.

In this example, the range and degree of movement of the transponder beacon is limited and not as extreme as the dynamic communications apparatus 114 and so can be considered to be substantially static. In this example, the substantially static communications apparatus 116 is restrained with respect to its ability to move, whereas the dynamic communications apparatus 114 is unrestrained. Indeed, in this example where one communications apparatus is substantially static and another communications apparatus is dynamic, the differentiation of the two statuses can simply be a matter of relative degree of possible movement. For example, when an apparatus is described herein as "substantially static", it should be appreciated that the apparatus is not completely deprived of the ability to move by a physical connection to a fixed feature external to the apparatus, and movement of the apparatus may occur within the above limitations by other influencing forces external to the apparatus, for example movement of water. Although, in the above example, the transceiver 114 is described as dynamic and the transponder beacon is substantially static, the skilled person should appreciate that, more generally, in other implementations, the first communications apparatus can be dynamic and enjoy the same or similar freedom to move as the second communications apparatus as will be described later herein in relation to another example.

Referring back to the PC 110, the PC 110 supports a suitable operating system in order to execute, for example, navigation software available from Sonardyne International Limited, and an offset calculation unit 120, the navigation software providing, in this example, position referencing functionality.

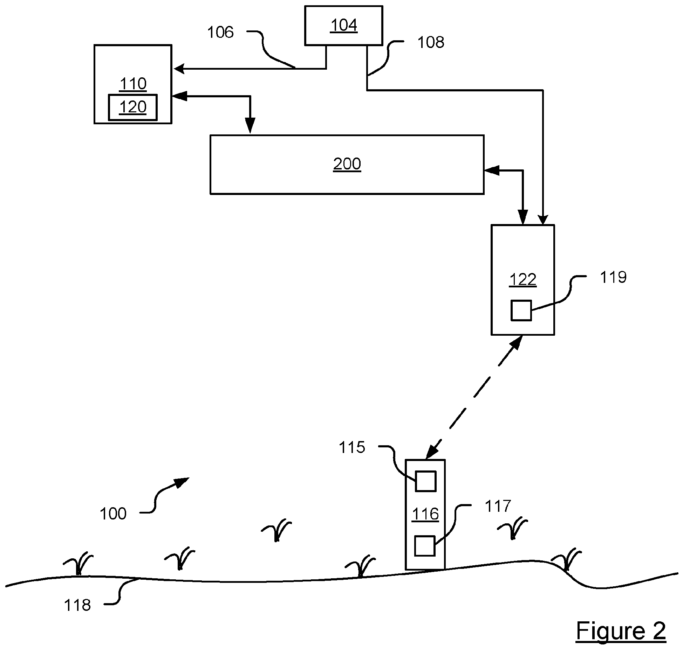

Another example of a system architecture (Figure 2) comprises a Surface Interface Unit 200 that provides power and communications conversion functionality. The PC 110 is operably coupled to a source of GPS-derived signals 104, for example a date and time data stream 106. The source of GPS-derived signals 104 also provides a one Pulse Per Second (1PPS) data stream 108 to another type of aquatic dynamic communications apparatus 122 to that described above in relation to the previous example, for example another transceiver, such as a Dunker 6 LBL transceiver available from Sonardyne International Limited, UK. In this regard, the source of GPS-derived signals 104 is operably coupled to the transceiver 122 via, for example, an RS-232 communications link. The Surface Interface Unit 200 is coupled to the PC 110 or any other suitable computing apparatus via, for example, an RS-232 communications link, and to the transceiver 122 via an RS-422 communications link. The transceiver 122 is capable, when in use, of communicating acoustically with a substantially static aquatic communications apparatus 116, for example a transponder beacon, such as the Compatt 6 transponder mentioned above, comprising an offset calculator 117 and a first source of time data 115. The transceiver 122 comprises a second source of time data 119. In this example, the transponder beacon is fixed or secured to the seabed 118 by a tether line or strop (not shown).

The above hardware configurations are, of course, examples only and different configurations are contemplated. For example, a minimalist configuration can comprise a first underwater transceiver and a second underwater transceiver, at least one of the first and second transceivers being dynamic and the at least one dynamic transceiver being capable of responding to a received message from the other transceiver. If synchronisation to a reference external to the first and second transceivers is desired, for example a GPS clock reference, or an atomic clock reference, a TIME message in conjunction with the 1PPS data stream 108 can be used. In this respect, the TIME command message is provided by a communications protocol of Sonardyne International Limited, the protocol being supported by the hardware units described above. Alternatively, the transceiver 122 can be arranged to support Ethernet connectivity, or replaced by a transceiver supporting such connectivity, and having Precision Time Protocol (PTP) capability so as to use time distributed in accordance with the PTP standard.

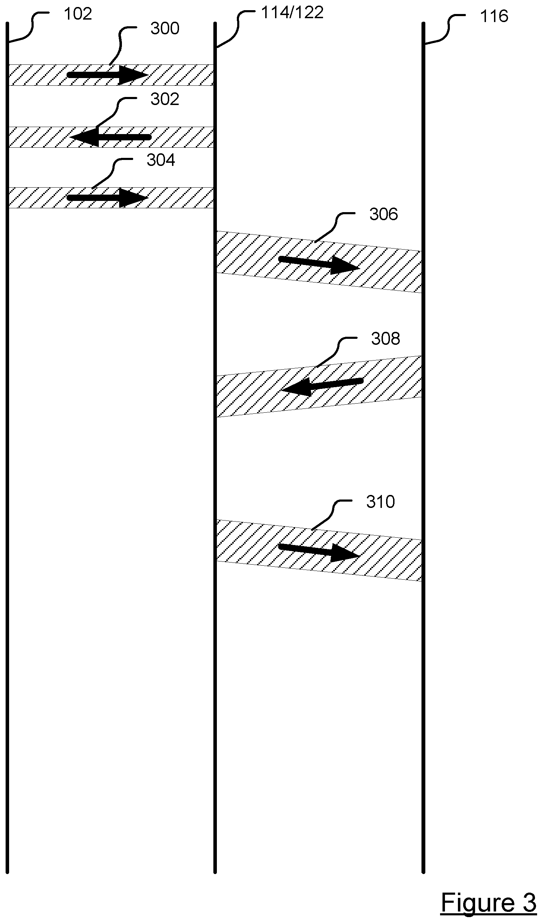

In operation (Figures 1 and 3), the offset calculation unit 120 supported by the PC 110 initiates via the navigation sensor hub 102 an offset calculation session by sending a TIME command message to the transceiver 114 to set (Step 300) the time of the internal clock 119 of the transceiver 114 based upon time data provided by way of receipt of the date and time data stream 106 from the source of GPS-derived signals 104. Thereafter, the transceiver 114 sets the internal clock to the time received from the navigation sensor hub 102 and then sends another TIME message (Step 302) to the navigation sensor hub 102 confirming the time set by the transceiver 114. The PC 110 then sends via the navigation sensor hub 102 a TSYNC command to the transceiver 114 (Step 304), which instructs the transceiver 114 to obtain a calculated offset value from the transponder 116. Whilst the above operations (Steps 300 to 304) are employed in this example, the skilled person should appreciate that they are not necessary for all implementations. Where an implementation requires setting the time of, for example, the transceiver 114 from an external source, the skilled person should appreciate that other techniques can be employed, for example using the PTP mentioned above. In such an implementation, the navigation sensor hub 102 can serve as a clock grandmaster in accordance with the PTP standard.

In this respect, at a first time, $T_{A1}$, the transceiver 114 sends a first TSYNC message to the transponder 116 (Step 306). The first TSYNC message is an "empty" message in the sense that it does not contain time data, but contains other parameters, for example address data, a command to get or set the time and/or an instruction as to whether to compensate for Doppler effects. The purpose of the first, TSYNC, message is to initiate a process of synchronisation. The transponder 116 receives the message from the transceiver 114 at a second time, $T_{B1}$. At a third time, $T_{B2}$, after a first predetermined "fixed", i.e. a known constant, turnaround time, $F_{TAT}$, for example of 320ms, the transponder 116 sends a first reply message (Step 308) to the transceiver 114, which constitutes a first acoustic signal having a first acoustic propagation path for the purposes of the calculation to be performed in this example. At a fourth time, $T_{A2}$, the transceiver 114 receives the first reply message from the transponder 116. At a fifth time, $T_{A3}$, after a second predetermined turnaround time, $F_{TAT}$, the transceiver 114 sends a second reply message, including first time data, for example the fifth time, $T_{A3}$, to the transponder 116 (Step 310), which is received by the transponder 116 at a sixth time, $T_{B3}$. The second reply message constitutes a second acoustic signal having a second propagation path for the purposes of the calculation to be performed in this example.

Upon receipt of the second reply message, the offset calculator of the transponder 116 is able to calculate the time offset between the first clock 115 of the transponder 116 and the second clock 119 of the transceiver 114 in the following manner.

One way time-of-flight, $T_{FAB2}$, is calculated using the following equation:

$$T_{FAB2} = (T_{B3} - T_{B2} - F_{TAT})/2 \qquad\qquad (1)$$

Once the one way time-of-flight has been calculated, the offset is calculated using the following equation:

$$Offset_{BA} = T_{B3} - T_{A3} + T_{FAB2} \qquad\qquad (2)$$

The above calculations are based upon an inverted model for calculating the offset between the first clock 115 and the second clock 119, namely the calculation is performed in respect of a communication originating from close to the seabed 118 and a reply thereto as opposed to a communication originating from beneath but close to the sea surface, for example from a surface vessel-mounted underwater transceiver, and a reply thereto. In this regard, and as mentioned above, the transceiver 114 is dynamic and so moves under the influence of motion of the sea. Consequently, measurements made are influenced by the opportunity for the transceiver 114 to move. This can occur during the turnaround time, but also during the propagation (times-of-flight) of the signals between the transceiver 114 and the transponder 116 if the offset calculation is to be based upon a two-way communication originating from the top side. In contrast, the inverted model requires measurements to be made that are only influenced by movement of the transceiver 114 during the second turnaround time, $F_{TAT}$. Hence, inaccuracy caused by movement of the transceiver 114 during the times-of-flight of communications between the transceiver 114 and the transponder 116 is mitigated.

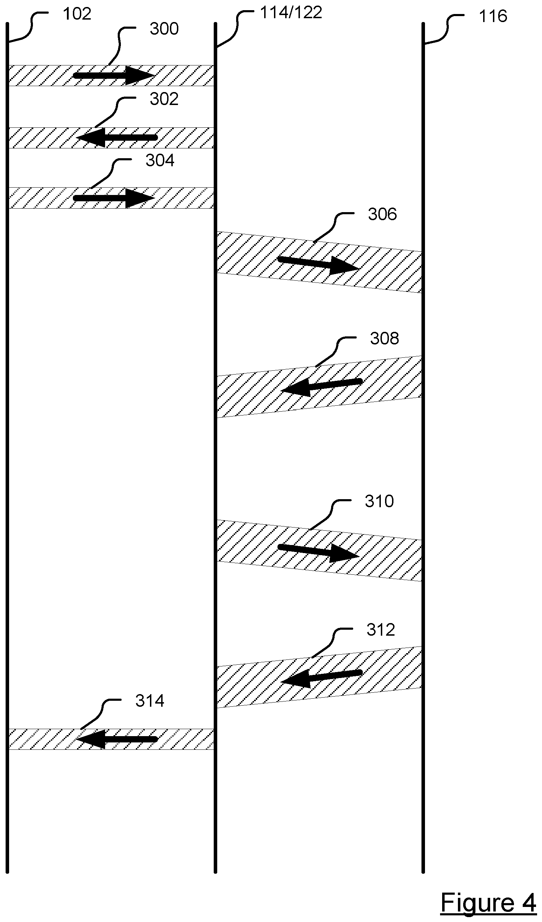

In another embodiment (Figures 4 to 6), Doppler shift data is used to improve accuracy of the offset calculated above. Referring to Figure 4, the offset calculation unit 200 supported by the PC 110 initiates, via the navigation sensor hub 102, an offset calculation session by sending a TIME command message to the transceiver 114 to set (Step 300) the time of the internal clock 115 of the transceiver 114 based upon time data provided by way of receipt of the date and time data stream 106 from the source of GPS-derived signals 104. Thereafter, the transceiver 114 sets the internal clock to the time received from the navigation sensor hub 102 and then sends another TIME message (Step 302) to the navigation sensor hub 102 confirming the time set by the transceiver 114. The PC 110 then sends, via the navigation sensor hub 102, a TSYNC command to the transceiver 114 (Step 304), which instructs the transceiver 114 to obtain a calculated offset value from the transponder 116.

In this respect, at a first time, $T_{A1}$, the transceiver 114 sends a first, TSYNC, message to the transponder 116 (Step 306) from a first position 400 (Figure 4). The first TSYNC message is an "empty" message in the sense that it does not contain time data, but contains other parameters, for example address data, a command to get or set the time and/or an instruction as to whether to compensate for Doppler effects (which in this example is required). The transponder 116 receives the message from the transceiver 114 at a second time, $T_{B1}$. The transponder 116 is equipped with hardware capable of making a fine estimate of Doppler shift along an acoustic path of a signal being received and therefore calculates a first Doppler shift, $Dop_{B1}$.

At a third time, $T_{B2}$, after a first predetermined turnaround time, $T_{TAT}$, for example of 320ms, the transponder 116 sends a first reply message (Step 308), which constitutes a first acoustic signal having a first acoustic propagation path for the purpose of the calculation to be performed in this example, to the transceiver 114. At a fourth time, $T_{A2}$, the transceiver 114 receives the first reply message from the transponder 116 from a second position 402 (Figure 4). The transceiver 114 is also equipped with hardware (not shown) capable of making a fine estimate of Doppler shift along an acoustic path of a signal being received and therefore calculates a second Doppler shift, $Dop_{A2}$, in respect of the acoustic path from the transponder 116 to the transceiver 114.

At a fifth time, $T_{A3}$, after a second predetermined turnaround time, $F_{TAT}$, the transceiver 114 sends a second reply message, which constitutes a second acoustic signal having a second acoustic propagation path for the purposes of the calculation to be performed in this example, including first time data, for example the fifth time, $T_{A3}$, to the transponder 116 (Step 310) from a third position 404 (Figure 4), which is received by the transponder 116 at a sixth time, $T_{B3}$. Thereafter, the transponder 116 calculates a third Doppler shift, $Dop_{B3}$, in respect of the acoustic path from the transceiver 114 to the transponder 116.

The transponder 116 also calculates an offset, $Offset_{BA}$, between the internal clock 115 of the transponder 116 and the internal clock 119 of the transceiver 114, 122 in the following manner, which differs slightly from the calculation set forth above due to the use of Doppler shift data.

In this regard, one way time-of-flight, $T_{FAB2}$, is calculated using the following equation:

$$T_{FAB2} = (T_{B3} - T_{B2} - F_{TAT})/2 \qquad (3)$$

Using the second and third calculated Doppler shifts, $Dop_{A2}$ and $Dop_{B3}$, the transponder 116 then calculates an average Doppler velocity using the following equation:

$$Dop_{TB} = (Dop_{B3} + Dop_{A2})/2 \qquad (4)$$

Once the average Doppler velocity has been calculated, a first difference, $d_1$, in respect of the dynamic acoustic communications apparatus 114, between an outgoing propagation leg (from the transponder 116 to the transceiver 114) and a return propagation leg (from the transceiver 114 to the transponder 116) is calculated as follows using equation (4) above.

$$d_1 = F_{TAT} * Dop_{TB} \qquad (5)$$

Using the difference in distance, $d_1$, calculated, a time shift component of an averaged Doppler shift calculated at the transponder 116, $T_{DopB}$, equating to half of a propagation time for sound in water can be calculated using the speed of sound in water, SS:

$$T_{DopB} = d_1 / (2 *SS) \qquad (6)$$

If a Doppler shift has occurred, then the one-way time-of-flight $T_{FAB2}$, calculated above will be a mid-point between the transmit and receive times assuming the Doppler shift is linear over the turnaround time, $F_{TAT}$. Half of this movement therefore needs to be subtracted from the one-way time-of-flight, $T_{FAB2}$.

Once the one way time-of-flight and the half of the propagation time, $T_{DopB}$, have been calculated, the offset can be calculated with improved accuracy using the following equation:

$$Offset_{BA} = T_{B3} - T_{A3} + T_{FAB2} - T_{DopB} \qquad (7)$$

The transponder 116 then communicates the second time, $T_{B1}$, the offset, $Offset_{BA}$, the third Doppler shift, $Dop_{B3}$ and the first Doppler shift, $DO_{PB1}$, to the transceiver 114 (Step 312). Thereafter, the transceiver 114 receives the second time, $T_{B1}$, the offset, $Offset_{BA}$, the third Doppler shift, $Dop_{B3}$ and the first Doppler shift, $DO_{PB1}$, from the transponder 116 from a fourth position 406 (Figure 4) and then calculates a fourth Doppler shift, $Dop_{A4}$.

The transceiver 114 then calculates another offset, $Offset_{AB}$, in the following manner. One way time-of-flight, $T_{FAB1}$, is calculated using the following equation:

$$T_{FAB1} = (T_{A2} - T_{A1} - F_{TAT})/2 \qquad (8)$$

The transceiver 114 then calculates an average Doppler velocity using the following equation:

$$Dop_{TA} = (Dop_{A2} + Dop_{B1})/2 \qquad (9)$$

Once the average Doppler velocity has been calculated, a second difference, $d_2$, in respect of the dynamic acoustic communications apparatus 114, between an incoming propagation leg (from the transceiver 114 to the transponder 116) and a return propagation leg (from the transponder 116 to the transceiver 114) is calculated as follows using equation (9) above.

$$d_2 = F_{TAT} * Dop_{TA} \qquad (10)$$

Using the difference in distance, $d_2$, calculated, a time shift component of an averaged Doppler shift calculated at the transceiver 114, $T_{DopA}$, equating to half of a propagation time for sound in water can be calculated using the speed of sound in water, SS:

$$T_{DopA} = d_2 / (2 *SS) \qquad (11)$$

If a Doppler shift has occurred, then the one-way time-of-flight $T_{FAB1}$, calculated above will be a mid-point between the transmit and receive times assuming the Doppler shift is linear over the turnaround time, $T_{TAT}$. Half of the time in respect of this movement therefore needs to be added to the one-way time-of-flight, $T_{FAB1}$.

Once the one way time-of-flight and the half of the propagation time, $T_{DopA}$, have been calculated, the offset can be calculated with improved accuracy using the following equation:

$$Offset_{AB} = T_{B1} - T_{A1} + T_{FAB1} + T_{DopA} \qquad (12)$$

Thereafter, the transceiver 114 communicates a TSYNC reply message to the navigation sensor hub 102 (Step 314), including the locally computed $Offset_{AB}$, the remote computed $Offset_{BA}$, the second Doppler shift, $Dop_{A2}$ in respect of the communication from the transponder 116 to the transceiver 114, the first Doppler shift, $DO_{PB1}$, in respect of the communication from the transceiver 114 to the transponder 116, and the third Doppler shift, $Dop_{B3}$, in respect of the communication from the transceiver 114 to the transponder 116. Optionally, the fourth Doppler shift, $Dop_{A4}$, can be communicated from the transceiver 114 to the navigation sensor hub 102. The navigation sensor hub 102 passes the received data to the PC 110. The offset calculation unit 120 then communicates the offset data to other applications supported by the PC 110, for example the navigation software or a monitoring system.

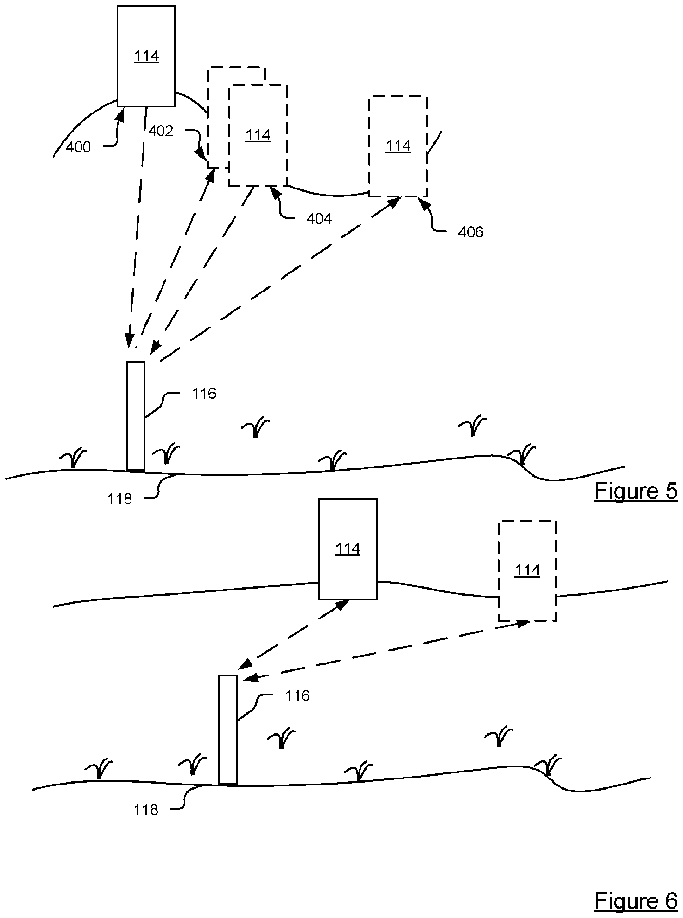

Referring to Figure 6, the above-mentioned methods and apparatus can be employed in relation to an environment where the water is shallow and horizontal velocity of the transceiver 114 is high, for example up to 20ms$^{-1}$, such as 5ms$^{-1}$.

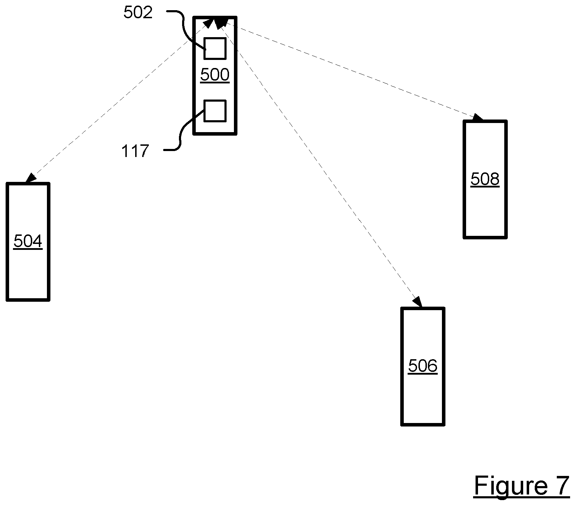

Turning to Figure 7, in another embodiment, a number of transponders are disposed in a spaced manner in an underwater environment. In contrast with the previous embodiment, the transceiver 114 is replaced with a first transponder 500 having an accurate internal clock 502 and the offset calculator 117. A second transponder 504, a third transponder 506 and a fourth transponder 508 are located in spaced relation with respect to each other and the first transponder 500. The second, third and fourth transponders 504, 506, 508 each have less accurate internal clocks than the internal clock 502 of the first transponder 500. In contrast to the configurations set forth above, the aquatic time synchronisation system does not comprise surface-side equipment, for example the navigation sensor hub 102, the source of GPS-derived signals 104, the PC 110, or the transceiver interface unit 112. Using the methodology set forth above in the previous embodiments, the second, third and fourth transponders 504, 506, 508 each independently communicate with the first transponder 500 in the manner described above in order to calculate a respective offset and clock drift rate in order to maintain synchronisation with the first transponder 500. Each of the first, second, third and fourth transponders 500, 504, 506, 508 are each equipped with suitable hardware to implement communications therebetween. In this regard, the first transponder 500 is designated a responding acoustic communications apparatus that is dynamic and receives a first acoustic signal from, for example, one of second, third or fourth transponders 504, 506, 508, and replies, with a second acoustic signal, to the one of the second, third or fourth transponders 504, 506, 508 from which the first acoustic signal originated. This general principle of a dynamic acoustic communications apparatus performing the role of responding to the first acoustic signal will be described in greater detail hereinafter. Optionally, where a given two communications apparatus are moving, both can comprise a motion detector in order to determine, which will serve as the substantially static apparatus for the purpose of calculating the time offset.

The first transponder 500 can be tethered underwater or coupled to or integrated in or with a submersible vehicle, for example an underwater Remotely Operated Vehicle (ROV) or an Autonomous Underwater Vehicle (AUV), or any other suitable underwater platform.

The skilled person should appreciate that other implementation to those set forth above are possible. In this regard, the above examples take advantage of the presence of an aquatic first acoustic communications apparatus that is capable of communicating acoustically with a dynamic aquatic second acoustic communications apparatus. The first acoustic communications apparatus, being substantially static or dynamic, is capable of transmitting a first acoustic signal to the second acoustic communications apparatus. Although being dynamic, the second acoustic communications apparatus is capable of providing a second acoustic signal in response to the first acoustic signal in a relatively short time, thereby minimising the change in position of the second acoustic communications apparatus between time of receipt of the first acoustic signal and transmission of the second acoustic signal. As the distance travelled by the second acoustic communications apparatus between the time of receipt of the first acoustic signal and the time of transmission of the second acoustic signal is only of relevance during the turnaround time, a clock offset calculation, for example in respect of an offset between a first clock of the first acoustic communications apparatus and a second clock of the second acoustic communications apparatus, is influenced less by movement of one or both of the first and second acoustic communications apparatus. Whereas, existing systems have allowed a transmitting acoustic communications apparatus to move over a round-trip time with the effect that the movement significantly impacts upon time offset calculation results, designating a dynamic acoustic communications apparatus to respond to the first acoustic signal instead of having the role of transmitting the first acoustic signal and receiving the second acoustic signal in response to the first acoustic signal, improves the accuracy of the time offset calculated when using a substantially static transmitting acoustic communications apparatus to transmit the first acoustic signal and receive the second acoustic signal. In this respect, the dynamic acoustic communications apparatus that receives the first acoustic signal and transmits the second acoustic signal can be disposed underwater towards the surface of a body of water or can be submerged further towards, for example, a seabed.

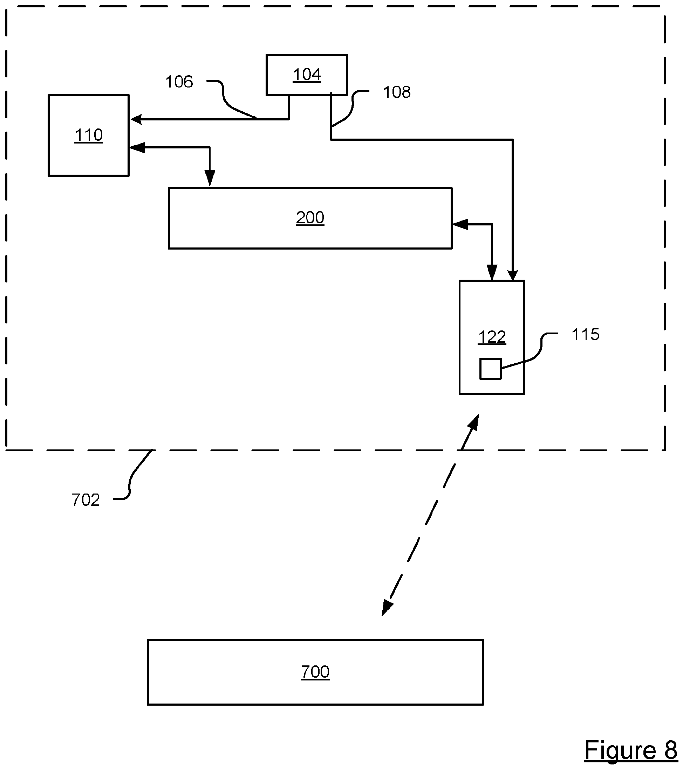

Referring to Figure 8, the example of Figure 2 can be varied to support an underwater dynamic platform, for example an AUV 700, where top-side equipment 702 is substantially static, for example as a result of use of an anchoring rig or a boat maintaining station using a dynamic positioning system. In this respect, the top-side equipment 702 comprises the surface interface unit 200, the transceiver 122, the source of GPS-derived signals 104 and the PC 110 arranged in the manner described above in relation to Figure 2. The AUV constitutes the second, dynamic, communications apparatus, and responds to a TSYNC message during a turnaround time as part of the process described above in relation to operation of Figures 1 and 2. As such, the offset calculation unit 120 of Figure 7 can calculate the time offset in accordance with the method set forth above in relation to Figure 3, for example. Optionally, in order to determine whether the transceiver 122 or the AUV 700 is moving least, and so serve as the substantially static apparatus for the purpose of calculating time offset, the AUV 700 and the transceiver 122 can each comprise a motion detector.

In the above examples, time data, including time offset data, has been communicated top-side acoustically. However, the skilled person should appreciate that data stored subsea by apparatus can be retrieved directly, if desired. For example, the first aquatic acoustic communications apparatus can comprise an output port and can be arranged to communicate the time data associated with a determined time offset via the output port. In this respect, a processing node comprising the offset calculator can be coupled to the output port and be arranged to receive the time data; the processing node can be a subsea processing node. The processing node can then either be retrieved subsequently or can communicate data, retrieved and/or calculated, top-side.

The location in the aquatic time synchronisation system where the offset is calculated can vary depending upon desired implementation. The offset calculator can therefore be provided in the second acoustic communications apparatus, or in the PC 110.

Alternative embodiments of the invention can be implemented as a computer program product for use with a computer system, the computer program product being, for example, a series of computer instructions stored on a tangible data recording medium, such as a diskette, CD-ROM, ROM, or fixed disk, or embodied in a computer data signal, the signal being transmitted over a tangible medium or a wireless medium, for example, microwave or infrared. The series of computer instructions can constitute all or part of the functionality described above, and can also be stored in any memory device, volatile or non-volatile, such as semiconductor, magnetic, optical or other memory device.

**Claims**

1. An aquatic time synchronisation system (100) comprising:

   an aquatic first acoustic communications apparatus (116) capable of communicating acoustically with a dynamic aquatic second acoustic communications apparatus (114), the aquatic first acoustic communications apparatus (116) comprising a first time source (115) and the dynamic aquatic second acoustic communications apparatus (114) comprising a second time source (119); and
   an offset calculator (117); wherein
   the aquatic first acoustic communications apparatus (116) is arranged to communicate a first acoustic signal (306) having a first acoustic propagation path associated therewith to the dynamic aquatic second acoustic communications apparatus (114) and the dynamic aquatic second acoustic communications apparatus (114) is arranged to communicate a second acoustic signal (308) having a second acoustic propagation path associated therewith to the aquatic first acoustic communications apparatus (116) in reply to the first acoustic signal (306);
   **characterised in that**:

   the aquatic first acoustic communications apparatus (116) is substantially static;
   the dynamic aquatic second acoustic communications apparatus (114) is arranged to calculate a Doppler shift ($Dop_{A2}$) observed thereby in respect of propagation of the first acoustic signal (306) along the first acoustic propagation path;
   the aquatic first acoustic communications apparatus (116) is arranged to calculate another Doppler shift ($Dop_{B3}$) observed thereby in respect of propagation of the second acoustic signal (308) along the second acoustic propagation path; and
   an average Doppler shift ($Dop_{TB}$) is calculated using the calculated Doppler shift ($Dop_{A2}$) and the another calculated Doppler shift ($Dop_{B3}$), and
   the offset calculator (117) is arranged to use data associated with the first and second acoustic signals (306,308) and the average Doppler shift ($Dop_{TB}$) in order to determine a time offset between the first and second time sources (115,119).

2. A system as claimed in Claim 1, wherein the second acoustic signal (308) is communicated in reply to the first acoustic signal (306) after a predetermined period of time ($F_{TAT}$).

3. A system as claimed in Claim 2, wherein a translation distance ($d_1$) in respect of movement of the dynamic aquatic second acoustic communications apparatus (114) is calculated using the average Doppler shift ($Dop_{TB}$) calculated and the predetermined period of time ($F_{TAT}$).

4. A system as claimed in any one of the preceding claims, wherein the second acoustic signal (308) comprises first time data.

**5.** A system as claimed in Claim 4, wherein the first time data comprises transmit time data in respect of the second acoustic signal (308).

**6.** A system as claimed in any one of the preceding claims, wherein the dynamic aquatic second acoustic communications apparatus (114) is located, when in use, remote from a seabed (118).

**7.** A system as claimed in any one of the preceding claims, wherein the aquatic first acoustic communications apparatus (116) is located, when in use, substantially adjacent the seabed (118) or tethered to the seabed (118).

**8.** A system as claimed in Claim 7, wherein movement of the aquatic first acoustic communications apparatus (116) is substantially immune to surface wave motion.

**9.** A system as claimed in any one of the preceding claims, wherein the dynamic aquatic second acoustic communications apparatus (114) is operably coupled to a surface vessel and, when in use, is immersed in water.

**10.** A system as claimed in any one of the preceding claims, wherein the aquatic first acoustic communications apparatus (116) comprises an output port and is arranged to communicate, when in use, time data associated with the determined time offset via the output port.

**11.** A system as claimed in Claim 10, further comprising a processing node coupled to the output port and arranged, when in use, to receive the time data.

**12.** A method of determining a time offset, the method comprising:

an aquatic first acoustic communications apparatus (116) communicating a first acoustic signal (306) having a first acoustic propagation path associated therewith to a dynamic aquatic second acoustic communications apparatus (114);
the dynamic aquatic second acoustic communications apparatus (114) communicating a second acoustic signal (308) having a second acoustic propagation path associated therewith to the aquatic first acoustic communications apparatus (116) in reply to the first acoustic signal (306);
**characterised by**:

maintaining the aquatic first acoustic communications apparatus (116) substantially static;
the dynamic aquatic second acoustic communications apparatus (114) calculating a Doppler shift ($Dop_{A2}$) observed thereby in respect of propagation of the first acoustic signal (306) along the first acoustic propagation path;
the aquatic first acoustic communications apparatus (116) calculating another Doppler shift ($Dop_{B3}$) observed thereby in respect of propagation of the second acoustic signal (308) along the second acoustic propagation path; and
calculating an average Doppler shift ($Dop_{TB}$) using the calculated Doppler shift ($Dop_{A2}$) and the another calculated Doppler shift (DopB3), and
the offset calculator (117) determining a time offset between a first time source (115) of the aquatic first acoustic communications apparatus (116) and second time source (119) of the dynamic aquatic second acoustic communications apparatus (114) using data associated with the first and second acoustic signals (306,308) and the average Doppler shift ($Dop_{TB}$)

**Patentansprüche**

**1.** Aquatisches Zeitsynchronisationssystem (100), Folgendes umfassend:

eine aquatische erste akustische Kommunikationsvorrichtung (116), die akustisch mit einer dynamischen aquatischen zweiten akustischen Kommunikationsvorrichtung (114) kommunizieren kann, die aquatische erste akustische Kommunikationsvorrichtung (116) umfassend eine erste Zeitquelle (115), und die dynamische aquatische zweite akustische Kommunikationsvorrichtung (114) umfassend eine zweite Zeitquelle (119); und
einen Versatzrechner (117);
wobei die aquatische erste akustische Kommunikationsvorrichtung (116) angeordnet ist, um ein erstes akustisches Signal (306), das einem ersten akustischen Ausbreitungsweg zugeordnet ist, der dynamischen aquatischen zweiten akustischen Kommunikationsvorrichtung (114) zu kommunizieren, und die dynamische aquatische zweite akustische Kommunikationsvorrichtung (114) angeordnet ist, um ein zweites akustisches Signal (308), das einem zweiten akustischen Ausbreitungsweg zugeordnet ist, an die aquatische erste akustische Kommunikationsvorrichtung (116) als Antwort auf das erste akustische Signal (306) zu kommunizieren; **dadurch gekennzeichnet, dass**:

die aquatische erste akustische Kommunikationsvorrichtung (116) im Wesentlichen statisch ist; die dynamische aquatische zweite akustische Kommunikationsvorrichtung (114) angeordnet ist, um eine dabei beobachtete Doppler-Verschiebung ($Dop_{A2}$) in Bezug auf die Ausbreitung des ersten akustischen Signals (306) entlang des ersten akustischen Ausbreitungswegs zu berechnen; die aquatische erste akustische Kommunikationsvorrichtung (116) angeordnet ist, um eine weitere dabei beobachtete Doppler-Verschiebung ($Dop_{B3}$) in Bezug auf die Ausbreitung des zweiten akustischen Signals (308) entlang des zweiten akustischen Ausbreitungswegs zu berechnen; und eine durchschnittliche Doppler-Verschiebung ($Dop_{TB}$) unter Verwendung der berechneten Doppler-Verschiebung ($Dop_{A2}$) und der weiteren berechneten Doppler-Verschiebung ($Dop_{B3}$) berechnet wird, und der Versatzrechner (117) so angeordnet ist, dass er Daten verwendet, die dem ersten und zweiten akustischen Signal (306, 308) und der durchschnittlichen Doppler-Verschiebung ($Dop_{TB}$) zugeordnet sind, um einen Zeitversatz zwischen der ersten und zweiten Zeitquelle (115, 119) zu bestimmen.

2. System nach Anspruch 1, wobei das zweite akustische Signal (308) als Antwort auf das erste akustische Signal (306) nach einer vorbestimmten Zeitspanne ($F_{TAT}$) kommuniziert wird.

3. System nach Anspruch 2, wobei ein Verschiebungsabstand ($d_1$) in Bezug auf die Bewegung der dynamischen aquatischen zweiten akustischen Kommunikationsvorrichtung (114) unter Verwendung der berechneten durchschnittlichen Doppler-Verschiebung ($Dop_{TB}$) und der vorbestimmten Zeitspanne ($F_{TAT}$) berechnet wird.

4. System nach einem der vorangehenden Ansprüche, wobei das zweite akustische Signal (308) erste Zeitdaten umfasst.

5. System nach Anspruch 4, wobei die ersten Zeitdaten Sendezeitdaten in Bezug auf das zweite akustische Signal (308) umfassen.

6. System nach einem der vorangehenden Ansprüche, wobei die dynamische aquatische zweite akustische Kommunikationsvorrichtung (114) bei Verwendung entfernt von einem Meeresboden (118) positioniert ist.

7. System nach einem der vorangehenden Ansprüche, wobei die aquatische erste akustische Kommunikationsvorrichtung (116) bei Verwendung im Wesentlichen benachbart zum Meeresboden (118) oder an den Meeresboden (118) angebunden positioniert ist.

8. System nach Anspruch 7, wobei die Bewegung der aquatischen ersten akustischen Kommunikationsvorrichtung (116) im Wesentlichen immun gegen Oberflächenwellenbewegungen ist.

9. System nach einem der vorangehenden Ansprüche, wobei die dynamische aquatische zweite akustische Kommunikationsvorrichtung (114) funktionsfähig mit einem Überwasserschiff gekoppelt ist und bei Verwendung in Wasser eingetaucht wird.

10. System nach einem der vorangehenden Ansprüche, wobei die aquatische erste akustische Kommunikationsvorrichtung (116) einen Ausgangsanschluss umfasst und angeordnet ist, um bei Verwendung Zeitdaten, die dem bestimmten Zeitversatz zugeordnet sind, über den Ausgangsanschluss zu kommunizieren.

11. System nach Anspruch 10, ferner umfassend einen Verarbeitungsknoten, der mit dem Ausgangsanschluss gekoppelt ist und bei Verwendung zum Empfangen der Zeitdaten angeordnet ist.

12. Verfahren zum Bestimmen eines Zeitversatzes, das Verfahren Folgendes umfassend:

eine aquatische erste akustische Kommunikationsvorrichtung (116), die ein erstes akustisches Signal (306), das einem ersten akustischen Ausbreitungsweg zugeordnet ist, an eine dynamische aquatische zweite akustische Kommunikationsvorrichtung (114) kommuniziert;

die dynamische aquatische zweite akustische Kommunikationsvorrichtung (114), die ein zweites akustisches Signal (308), das einem zweiten akustischen Ausbreitungsweg zugeordnet ist, an die aquatische erste akustische Kommunikationsvorrichtung (116) als Antwort auf das erste akustische Signal (306) kommuniziert;
**gekennzeichnet durch**:

das Aufrechterhalten der aquatischen ersten akustischen Kommunikationsvorrichtung (116) als im Wesentlichen statisch;
die dynamische aquatische zweite akustische Kommunikationsvorrichtung (114), die eine dabei beobachtete Doppler-Verschiebung ($Dop_{A2}$) in Bezug auf die Ausbreitung des ersten akustischen Signals (306) entlang des ersten akustischen Ausbreitungswegs berechnet;
die aquatische erste akustische Kommunikationsvorrichtung (116), die eine weitere dabei beobachtete Doppler-Verschiebung ($Dop_{B3}$) in Bezug auf die Ausbreitung des zweiten akustischen Signals (308) entlang des zweiten akustischen Ausbreitungswegs berechnet; und
das Berechnen einer durchschnittlichen Doppler-Verschiebung ($Dop_{TB}$) unter Verwendung der berechneten Doppler-Verschiebung ($Dop_{A2}$) und der weiteren berechneten Doppler-Verschiebung ($Dop_{B3}$), und **dadurch**, dass der Versatzrechner (117) einen Zeitversatz zwischen einer ersten Zeitquelle (115) der aquatischen ersten akustischen Kommunikationsvorrichtung (116) und einer zweiten Zeitquelle (119) der dynamischen aquatischen zweiten akustischen Kommunikationsvorrichtung (114) unter Verwendung von Daten, die dem ersten und dem zweiten akustischen Signal (306, 308) und der durchschnittlichen Doppler-Verschiebung ($Dop_{TB}$) zugeordnet sind, bestimmt.

## Revendications

1. Système aquatique de synchronisation temporelle (100) comprenant :

   un premier appareil aquatique de communication acoustique (116) capable d'entrer en communication par voie acoustique avec un second appareil aquatique dynamique de communication acoustique (114), le premier appareil aquatique de communication acoustique (116) comprenant une première source temporelle (115) et le second appareil aquatique dynamique de communication acoustique (114) comprenant une seconde source temporelle (119) ; et
   un calculateur de décalage (117) ; dans lequel le premier appareil aquatique de communication acoustique (116) est conçu pour établir une communication entre un premier signal acoustique (306) auquel est associée une première voie de propagation acoustique et le second appareil aquatique dynamique de communication acoustique (114), et le second appareil aquatique dynamique de communication acoustique (114) est conçu pour établir une communication entre un second signal acoustique (308) auquel est associée une seconde voie de propagation acoustique et le premier appareil aquatique de communication acoustique (116) en réponse au premier signal acoustique (306) ;

   **caractérisé en ce que**

   le premier appareil aquatique de communication acoustique (116) est essentiellement statique ;
   le second appareil aquatique dynamique de communication acoustique (114) est conçu pour calculer un décalage Doppler ($Dop_{A2}$) que l'on observe de cette manière en réponse à la propagation du premier signal acoustique (306) le long de la première voie de propagation acoustique ;
   le premier appareil aquatique de communication acoustique (116) est conçu pour calculer un autre décalage Doppler ($Dop_{B3}$) que l'on observe de cette manière en réponse à la propagation du second signal acoustique (308) le long de la seconde voie de propagation acoustique ; et
   on calcule un décalage Doppler moyen ($Dop_{TB}$) en utilisant le décalage Doppler calculé ($Dop_{A2}$) et l'autre décalage Doppler calculé ($Dop_{B3}$) ; et
   le calculateur de décalage (117) est conçu pour utiliser des données associées au premier et au second signal acoustique (306, 308) et au décalage Doppler moyen ($Dop_{TB}$) dans le but de déterminer un décalage de temps entre la première et la seconde source temporelle (115, 119).

2. Système selon la revendication 1, dans lequel le second signal acoustique (308) est mis en communication en réponse au premier signal acoustique (306) après un laps de temps prédéterminé ($F_{TAT}$).

3. Système selon la revendication 2, dans lequel on calcule une distance de translation ($d_1$) par rapport au mouvement du second appareil aquatique dynamique de communication acoustique (114) en utilisant le décalage Doppler moyen ($Dop_{TB}$) calculé et le laps de temps prédéterminé ($F_{TAT}$).

4. Système selon l'une quelconque des revendications précédentes, dans lequel le second signal acoustique (308) comprend des premières données temporelles.

5. Système selon la revendication 4, dans lequel les premières données temporelles comprennent des données de temps de transmission par rapport au second signal acoustique (308).

6. Système selon l'une quelconque des revendications précédentes, dans lequel le second appareil aquatique dynamique de communication acoustique (114) est disposé, lorsqu'on l'utilise, à distance d'un fond marin (118).

7. Système selon l'une quelconque des revendications précédentes, dans lequel le premier appareil aquatique de communication acoustique (116) est disposé, lorsqu'on l'utilise, en position essentiellement adjacente au fond marin (118) ou est ancré au fond marin (118).

8. Système selon la revendication 7, dans lequel le mouvement du premier appareil aquatique de communication acoustique (116) est essentiellement insensible aux mouvements des ondes de surface.

9. Système selon l'une quelconque des revendications précédentes, dans lequel le second appareil aquatique dynamique de communication acoustique (114) est couplé de manière opérationnelle à un navire de surface et, lorsqu'il est utilisé, est immergé dans l'eau.

10. Système selon l'une quelconque des revendications précédentes, dans lequel le premier appareil aquatique de communication acoustique (116) comprend un port de sortie et est conçu pour entrer, lorsqu'on l'utilise, en communication avec des données temporelles associées au décalage de temps déterminé, via le port de sortie.

11. Système selon la revendication 10, comprenant en outre un noeud de traitement couplé au port de sortie et conçu, lorsqu'on l'utilise, pour la réception des données temporelles.

12. Procédé pour la détermination d'un décalage dans le temps, le procédé comprenant :

le fait qu'un premier appareil aquatique de communication acoustique (116) établit une communication entre un premier signal acoustique (306) auquel est associée une première voie de propagation acoustique et un second appareil aquatique dynamique de communication acoustique (114) ;
le fait que le second appareil aquatique dynamique de communication acoustique (114) établit une communication entre un second signal acoustique (308) auquel est associée une seconde voie de propagation acoustique et le premier appareil aquatique de communication acoustique (116) en réponse au premier signal acoustique (306) ;

**caractérisé :**

**par** le fait de maintenir le premier appareil aquatique de communication acoustique (116) essentiellement statique ;
par le fait que le second appareil aquatique dynamique de communication acoustique (114) calcule un décalage Doppler ($Dop_{A2}$) que l'on observe de cette manière en réponse à la propagation du premier signal acoustique (306) le long de la première voie de propagation acoustique ;
par le fait que le premier appareil aquatique de communication acoustique (116) calcule un autre décalage Doppler ($Dop_{B3}$) que l'on observe de cette manière en réponse à la propagation du second signal acoustique (308) le long de la seconde voie de propagation acoustique ; et
par le fait que l'on calcule un décalage Doppler moyen ($Dop_{TB}$) en utilisant le décalage Doppler calculé ($Dop_{A2}$) et l'autre décalage Doppler calculé ($Dop_{B3}$) ; et
par le fait que le calculateur de décalage (117) détermine un décalage dans le temps entre une première source temporelle (115) du premier appareil aquatique de communication acoustique (116) et une seconde source temporelle (119) du second appareil aquatique dynamique de communication acoustique (114) en utilisant des données qui sont associées au premier et au second signal acoustique (306, 308) et au décalage Doppler moyen ($Dop_{TB}$).

Figure 1

Figure 2

Figure 3

_Figure 4_

Figure 5

Figure 6

502

500

117

504

508

506

Figure 7

*Figure 8*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2525240 A2

**Non-patent literature cited in the description**

- Standard for a Precision Clock Synchronisation Protocol for Networked Measurement and Control Systems. *IEEE Precision Time Protocol (PTP) standard 1588-2002*